# EUROPEAN PATENT APPLICATION

(11) **EP 4 231 169 A1**
(43) Date of publication of application: **23.08.2023**
(21) Application number: 22167965.7
(22) Date of filing: 12.04.2022
(51) Int. Cl.: G06F 16/21

(54) **ONE-CLICK PARADIGM FOR DATA PROCESSING IN DATA MIGRATION**

(30) Priority: 17.02.2022 US 202217674257
(71) Applicant: Business Mobile AG, 8280 Kreuzlingen (CH)
(72) Inventor: von und zu Liechtenstein, Maximilian Ralph Peter, IM1 3EF Douglas (IM); Failer, Thomas, 8280 Kreuzlingen (CH)
(74) Representative: Swisspat Riederer Hasler Patentanwälte AG

(57) **Abstract**

A computer implemented method for processing information related to an extract-transform-load (ETL) data migration, may include extracting a full set of transactional data, master data and customizing data from a source system, separating said transactional data into history data and operational data, creating a copy of said source system without said transactional data, creating an instance of a target system by performing a combined system conversion and database migration on said copy of said source system, transforming said operational data in such a way that it becomes compatible with a data schema of a database for operational data on said target system, loading said transformed operational data into said database for operational data, loading said history data into a database for history data on an archive system, and loading a search help module in relation to a user query for transactional data on said target system.

## Description

### 1. Field of the Inventions

The present invention relates generally to the field of data migration, and more particularly to data migration that uses extract-transform-load (ETL) processes.

### 2. Description Of The Related Art

For many large enterprise transformation efforts, migration of data from legacy systems to a future-state environment (that is, the target environment) is a critical project component, because having actual source data in the target environment is often a pre-requisite for productive integration testing of anew technology solution. This data migration effort is organized by use of constructs known as conversion objects. Each conversion object pulls data from one or more sources (for example, source databases). During data migration, the data corresponding to each conversion object is transformed based on "conversion rules" so that data which was in a suitable form and format for the old environment (that is, the source environment) will be transformed into a form and format suitable for the new target environment. After and/or during transformation, the transformed data is loaded into the target system (for example, one or more target databases).

If a company decides to adopt the Greenfield approach, it abandons its existing ERP system. This has the advantage that a new, uniform system can be implemented that only contains the processes and data that are actually necessary.

If a company completely redefines its enterprise architecture, innovations can also be integrated more easily and a high level of functionality can be achieved.

With the Brownfield approach, a system conversion takes place. This means that existing business processes are taken over and optimized if necessary. Since most companies do not want to completely abandon their custom ERP system, the Brownfield approach is the most popular migration path.

The third alternative, namely the hybrid approach and its landscape transformation is not an independent migration strategy. It is simply a method that large companies with complex system landscapes can use to prepare for migration. In practice, this means that databases are cleaned up and consolidated to reduce the footprint before the change.

SAP ERP (herein sometimes simply referred to as "SAP") is SAP AG's Enterprise Resource Planning software. SAP incorporates the key business functions of an organization. SAP includes functionality in many areas, such as accounts payable, accounts receivable, accounting and financial reporting, risk management, regulatory compliance, and so on. SAP includes several modules, including: (i) utilities for marketing and sales; (ii) field service; (iii) product design and development; (iv) production and inventory control; (v) human resources; and (vi) finance and accounting. SAP obtains data from the various modules to provide the company or organization with enterprise resource planning capabilities. SAP can potentially be used by an enterprise to go from an older calculations system to a fully integrated software package. (Note: the term(s) "SAP", "SAP ERP" and/or "SAP ENTERPRISE RESOURCE PLANNING" may be subject to trademark rights in various jurisdictions throughout the world and are used here only in reference to the products or services properly denominated by the marks to the extent that such trademark rights may exist.)

SAP is used in this document as a non-limiting example of a data migration target system. Other non-limiting example targets include SAP CRM and systems from salesforce.com, among others. (Note: the term(s) "SAP CRM", "SAP CUSTOMER RELATIONSHIP MANAGEMENT", and/or "SALESFORCE.COM" may be subject to trademark rights in various jurisdictions throughout the world and are used here only in reference to the products or services properly denominated by the marks to the extent that such trademark rights may exist.)

As will become apparent from the description and explanation set forth below, the present inventions address the above-described needs.

### SUMMARY OF THE INVENTIONS

This disclosure provides, in part, various methods. One method may include processing information related to an extract-transform-load (ETL) data migration.

The demand for transformation projects is picking up speed. This is especially applicable to transformation projects involving the vendor SAP SE whereby such transformations are usually upgrades between the SAP ERP ECC6.0 system and the newer SAP ERP S/4 HANA. Existing customers encounter a key obstacle: the insufficient supply of specialist consultants and migration specialists.

In recent years, it has become a convention to use color to indicate the different possible system migration approaches. The color spectrum ranges from brownfield to greenfield with a wide variety of shades in between. At one end of this spectrum is the brownfield approach. This means the complete takeover of the previous data structures, business objects and individual adjustments as well as in-house developments including the complete legacy data stock.

At the other end, a new start on a green field is possible. In this approach, known as the Greenfield Approach, companies start from scratch with data structures, business objects, and customizations as they see fit for their own business future. If the companies want to take over data from the legacy systems with this approach, they have two options: either they transform all this data with great effort or only the master data and the open items. In both cases, however, the original data collected to date remains in the legacy systems, which then have to be operated in parallel for longer periods of time for legal and business reasons.

Both extremes have their justification, but also significant disadvantages. Companies with a homogeneous system landscape, i.e. without external systems and different release statuses, which do not want to change their previous business and therefore consciously avoid changes and innovations, find their optimal method for the transformation to SAP S/4HANA in the brownfield approach.

In the case of large existing SAP customers, however, the system landscapes are usually so heterogeneous and the data stocks so extensive that their conversion with the brownfield approach seems to be uncomplicated from a technical point of view. But appearances are deceptive: for this, many prerequisites have to be created in the source systems in preliminary projects, some of which are complex. This includes, among other things, the adjustment of individual developments or the activation of new business logic. In addition, many test runs are necessary, in which the specialist departments must also be involved in order to avoid errors. In addition: The conversion of the usually very large amounts of data usually requires immense computing capacities, including high costs. Against this background, it is no longer surprising that many existing SAP customers have trouble justifying the business case of an SAP transformation project.

From a business point of view, the dependencies between the data, their structures and original systems, but also between interfaces between different systems, are even more serious. Incidentally, this also includes data that is unfortunately mostly hardwired to outdated or numerous organizational units, document types and processes that are no longer relevant. In many cases, this data may account for up to 90 percent of the entire database. In fact, the dependencies are so great that they nullify the chance for a fresh start or the laying of the foundation for new business models and processes that management in most cases associates with the generational change.

Incidentally, solving this fundamental problem of dependencies only has the slightest chance of success, whether the companies are trying to solve it at the source system level, i.e., before the switch, or afterwards. This is because it is practically impossible to clean up master data with relationships to outdated data structures, let alone achieve a harmonized, i.e. cross-system view of the master data, which is usually distributed across several different source systems. The reason is that existing SAP customers have to contend with extreme dependencies such as thousands of unclosed documents when using this method; in some cases it may no longer be possible to get the data out of the archives, the technology of which in many cases dates back many decades.

In short: The linking of master data with transaction data and individual adjustments in the legacy systems prevents or at least makes it extremely difficult to clean them up. And since the relevant master data can usually not only be found in one, but in several and different systems, the problem multiplies. Because these different master data from different systems would first have to be harmonized before the conversion, which in turn prevents dependencies. The vicious circle is perfect. Overall, however, the associated effort for both the specialist departments and IT cannot be justified in practice.

In a classic brownfield scenario after switching to SAP S/4HANA customers have to instruct their business users to do it. If we assume that a business user needs ten minutes to check and clean up a master data record, then the company has to plan over 10,000 working days for a master data stock of 500,000 individual data records assuming an eight-hour day. Of course, this task can be spread over many shoulders. Nevertheless, the associated effort is considerable. Because the problem of linking different data types with each other and with the systems does not only exist in the source systems, but also in the target systems. Solving the problem is also technically hardly possible there.

When it comes to transactional data, things are equally problematic. The ERP landscapes of the large existing SAP customers in German-speaking countries have grown over the past ten to twenty years. Even if one assumes that the companies need the data stock of the entire past year in SAP S/4HANA for further processing, with a brownfield approach they convert 90 to 95 percent of the data completely free of charge. Furthermore this legacy data weighs down the new system very significantly, which ties up enormous computing and memory resources, but still leads to poor runtimes and greatly increases the maintenance and operating costs, especially for updates or upgrades. All in all, the basis for the optimization of data quality on the one hand and the modernization of processes on the other hand is almost completely eliminated.

In contrast, the greenfield approach has undeniable advantages. Companies with a very heterogeneous system landscape and large databases in particular benefit from this if, for example, they completely change their business model and start from scratch almost like a startup. Or if they fundamentally reorganize their structures and processes from a centralized to a decentralized organization.

It is true that best-practice approaches that promise extensive standardization are tempting. But many existing SAP customers also fear this, as it threatens to devalue the high investments that are made in the bespoke versions of the old systems, including customer-specific developments and the resulting optimized processes. After all, existing SAP customers have made these investments to gain unique competitive advantages. The effort involved in replicating this in the new software generation is enormous. Here, too, the business case usually does not pay off.

With the greenfield approach, the alternative would be to exclusively transfer the open items and master data. However, this often leads to a massive acceptance problem within the company. Because users at all levels up to the CFO want easy access to all legacy information for business reasons, and this on two conditions: They want to access it from "their" interface and not jump back and forth between different solutions. Also, you want the legacy information to look the same as if it was created in the new system. Basically, both conditions speak again for a brownfield approach, which the CIOs and their management colleagues prefer to avoid in favor of change and innovation.

In terms of transformation, the most diverse color gradations between brown and green have meanwhile established themselves. What they all have in common, however, is the fact that only part of the legacy data is transformed and transferred to the new world. In principle, this approach is correct in order to reduce the effort involved in both the transformation and the migration. In addition, it basically offers the flexibility to optimize the future system independently of master and transaction data in a kind of combination of brownfield and greenfield approach. The selective data transfer is certainly the right thing for those existing SAP customers with a large system landscape who, despite adjustments, largely rely on continuity and want to build the new landscape largely on the predecessor systems.

However, the specialist departments also want to be able to see and access all historical data in the new system. Companies have never needed access to their historical information going back decades more than they do today. The digital economy means that commercial offerings are increasingly made up of products, supplementary services and maintenance services. Such complex offerings have life cycles of between ten and fifty years. Historical information, even if it dates back many years and is no longer changed in day-to-day business, has the same relevance as operational information for product development and the continuous optimization of offers and their quality based on data analysis.

However, from the point of view of the project managers responsible for the SAP transformation, this desire of the specialist departments cannot be fulfilled. More than the transfer of the data from the last two or three years is not possible in order to retain the flexibility to at least partially adapt and optimize the new system.

But even if IT prevails over business, the selective data transfer proves to be suboptimal in many cases: Firstly, this approach works primarily when the source and target systems are very similar, i.e. when it is between the latest ECC version, for example and SAP S/4HANA is applied. Second, the selective data transformation tools that work at the table level can introduce the risk of inconsistencies. This risk can be contained with a very high level of testing. But even that usually only helps to a limited extent when cleaning up the data in order to optimize its quality for the new system world. Accordingly, existing SAP customers only have a few options for ensuring a harmonized database that is fed both from data from the SAP legacy systems and from third-party systems. However, this possibility of harmonization is an essential prerequisite for realizing the goal of a data-driven company - not to mention that with the approach of selective data transfer analogous to the brownfield approach, a change to the public cloud or a (partial) change to a system of a third-party manufacturer is only possible to a very limited extent.

The fact that the data and their dependencies represent the fundamental challenge in the SAP generation change is a realization that is currently breaking ground in the SAP community. The ideal would be a transformation path that is technically as uncomplicated as the brownfield approach, but as flexible as the greenfield method, in which the companies cut old habits, implement new business processes and models and only transfer master data of the best quality to the new system be able.

The present inventors have realized that a one-click type solution which combines the advantages of both the greenfield and the brownfield approach is possible. The prerequisite, however, is that the transformation at the application level takes place independently of the data level. For this purpose, all legacy information together with its business context must be able to be removed completely, unchanged and above all efficiently and quickly and transferred to its own platform. After that, existing SAP customers are free to choose whether they want to take their previous application environment with all existing business objects, adjustments and in-house developments into the new S/4 world (brownfield) or start from scratch (greenfield).

For this purpose, that part of the information from the legacy systems that is also required in SAP S/4HANA must be filtered out on a separate platform according to business criteria, cleaned up, and data from third-party systems can be enriched and optimized. While only five to ten percent of the transaction data usually has to be transformed and migrated to SAP S/4HANA after optimization, the amount of master data is reduced to an estimated twenty percent, which can then also be processed in optimal quality using standard tools such as the Migration Cockpit be taken over by SAP. Of course, all of this has to be largely automated.

The platform must be able to display the historical data in the SAP S/4HANA world via SAP GUI or SAP Fiori as if it originated there. This on-the-fly transformation using the "technical structure mapping" procedure (which is realized by a JOIN repository), of course without changing the original structure of the historical data on the platform itself - may also take place automatically. This level of automation from data extraction to display in the new environment is the essence of a one-click transformation.

Although not entirely dissimilar to the selective data acquisition approach, the one-click transformation has significant additional advantages.

First, all data - historical and operational - can be cleaned up, easily enriched with data from third-party sources and optimally prepared for big data and analytics scenarios. Incidentally, this applies not only to the transactional data, but also to all master data, including the customer, supplier, article and material masters that are so important for the digital transformation.

Second, in addition, the decision as to which data from the previous database should be transformed and migrated to SAP S/4HANA is made flexibly according to the customer's relevant business criteria. So instead of, for example, taking over all the data from the last three years, existing customers can consciously decide only to transform and migrate the open orders and master data for customers and suppliers with whom they have ongoing business relationships.

Third, Chief Financial Officers (CFOs) can also be appeased in this scenario: Because when CFOs and specialist departments argue that they need all the old data in the new system, then there is a misunderstanding here: what they really need, is not the historical data in the new system, but "only" access to it from the SAP S/4HANA interface. With the one-click transformation approach, this is easy to do. Users don't even realize when they access historical data that it is not actually stored in the SAP HANA database.

A clean and transparent database for competition in the digital economy, a massive reduction in the data to be transformed and migrated and its transfer with the standard tools from SAP are just a few of the advantages of this approach. In addition:

Fourth, after the historical information has been transferred to the separate platform, the legacy systems and applications can be completely shut down. As a rule of thumb, this eliminates 80 percent of the operating costs. The time and cost of actual data filtering, transformation, and migration is cut in half.

Fifth, since the data newly added to the SAP S/4HANA world can be continuously transferred to the platform, the new environment and in particular the SAP HANA in-memory database remain lean in the long term. The savings potential that can be achieved through this continuous rightsizing is likely to be 25 percent or more over the entire life cycle of the new environment.

Sixth, a one-click transformation can also help those customers who have opted for the classic approaches of brownfield, greenfield and selective data transition and have already taken initial measures. Because it complements these processes with their specific advantages, starting with the identification and design of filter rules, through the historization, preparation and harmonization of the data, to their integration into SAP S/4HANA. In addition, it enables the complete decommissioning of legacy systems, including corresponding savings in operating costs.

In all of this, audit requirements must not be forgotten. All historical data and documents are stored on the platform in an audit-proof manner. In addition, a platform that supports the one-click transformation approach offers the possibility of managing the stored information down to the level of the individual data record or document over its entire life cycle until legally secure deletion after the applicable retention periods have expired. This also allows the increased legal requirements such as the targeted deletion regulations of the European General Data Protection Regulation (EU-GDPR) to be met.

The one-click transformation approach is particularly characterized by the consistent and continuous separation of historical data from operational data. In this way, the fundamental problems of the dependencies described can be solved. In addition, the platform that supports this approach preserves the transformation knowledge and makes it permanently available: for accessing historical data from SAP S/4HANA, for accessing historical data from non-SAP systems and making data available for third-party applications such as analytics solutions.

Incidentally, the data transfer to a separate and modern platform also contributes to greater security because, unlike some legacy systems, this platform can also be patched in the future. Because many legacy systems have to be operated on old software releases and therefore usually need outdated operating systems and databases. In many cases, however, the manufacturers no longer provide any security patches for these.

In addition, such a platform can serve as a digital repository for business-relevant data and its context, which are created in SaaS and other cloud solutions, where the rights to this data do not lie with the companies, but with the providers of these solutions - thus access to this data is retained even after the subscriptions have been terminated. After all, such a platform lays the foundation for IoT scenarios or digital twins of products, machines & systems, buildings, etc., which - enriched with operating data - can decisively improve their manufacture, operation, maintenance and management. All of this is made possible because such a platform keeps historical information together with its business context, but independent of its originating systems. The large number of failed data lake projects, in which the business context is missing, shows that this platform approach is far better able to cope with the future requirements in terms of enterprise-wide data management. This brings existing SAP customers a good deal closer to the goal of a data fabric recommended by analysts.

There has thus been outlined, rather broadly, some of the features of the data processing technique in order that the detailed description thereof may be better understood, and in order that the present contribution to the art may be better appreciated. There are additional features of the data processing technique that will be described hereinafter and that will form the subject matter of the claims appended hereto. In this respect, before explaining at least one embodiment of the data processing technique in detail, it is to be understood that the data processing technique is not limited in its application to the details of construction or to the arrangements of the components set forth in the following description or illustrated in the drawings. The data processing technique is capable of other embodiments and of being practiced and carried out in various ways. Also, it is to be understood that the phraseology and terminology employed herein are for the purpose of the description and should not be regarded as limiting.

In one aspect, the present inventions may include a computer implemented method for processing information related to an extract-transform-load (ETL) data migration, the method comprising: extracting a full set of transactional data, master data and customizing data from a source system, separating said transactional data into history data and operational data, creating a copy of said source system without said transactional data, creating an instance of a target system by performing a combined system conversion and database migration on said copy of said source system, transforming said operational data in such a way that it becomes compatible with a data schema of a database for operational data on said target system, loading said transformed operational data into said database for operational data, loading said history data into a database for history data on an archive system, loading a search help module in relation to a user query for transactional data on said target system, wherein said search help is configured to query master data from said database for operational data and from said database for history data, and in response to said user query: obtaining a first result set sourced from said database for history data and transforming said first result set in such a way that field names are mapped from a schema of said database for history data to a schema of said operational database, and performing a set theory UNION operation between said first result set and a second result set sourced from said database for operational data. Another feature of this aspect of the present inventions may be that the method may further comprise loading history data sourced from a second source system into a schema of said database for history data, and wherein said set theory UNION operation is between said first result set, said second result set and a third result set sourced from said database for history data, wherein said third result set relates to a query in said schema. Another feature of this aspect of the present inventions may be that the method may further comprise separating said master data into history data and operational data. Another feature of this aspect of the present inventions may be that the method may further comprise in response to said user query: performing data element value mapping. Another feature of this aspect of the present inventions may be that the method may further comprise in response to said user query: performing table name/field name value mapping. Another feature of this aspect of the present inventions may be that the method may further comprise in response to said user query: performing structure mapping.

Other features, aspects and advantages of the present inventions will become apparent from the following discussion and detailed description.

### BRIEF DESCRIPTION OF THE DRAWINGS

Example embodiments will become more fully understood from the detailed description given herein below and the accompanying drawings, wherein like elements are represented by like reference characters, which are given by way of illustration only and thus are not limitative of the example embodiments herein.
Figure 1 illustrates a schematic view according to an embodiment of the present inventions.
Figure 2 illustrates a schematic view according to an embodiment of the present inventions.
Figure 3 illustrates a schematic view according to an embodiment of the present inventions.
Figure 4 illustrates a schematic view according to an embodiment ofthe present inventions.
Figure 5 illustrates a schematic view according to an embodiment of the present inventions.
Figure 6 illustrates tables containing information relevant to an embodiment of the present inventions.
Figure 7 illustrates tables containing information relevant to an embodiment of the present inventions.

While the inventions will be described in connection with the preferred embodiments, it will be understood that the scope of protection is not intended to limit the inventions to those embodiments. On the contrary, the scope of protection is intended to cover all alternatives, modifications, and equivalents as may be included within the spirit and scope of the inventions as defined by the appended claims.

### DETAILED DESCRIPTION OF THE INVENTION

As will be appreciated by one skilled in the art, aspects of the present inventions may be embodied as a system, method or computer program product. Accordingly, aspects of the present inventions may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present inventions may take the form of a computer program product embodied in one or more computer-readable medium(s) having computer readable program code/instructions embodied thereon.

Any combination of computer-readable media may be utilized. Computer-readable media may be a computer-readable signal medium or a computer-readable storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of a computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible medium that can contain, or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device.

Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present inventions may be written in any combination of one or more programming languages, including an object oriented programming language such as Java (note: the term(s) "Java" may be subject to trademark rights in various jurisdictions throughout the world and are used here only in reference to the products or services properly denominated by the marks to the extent that such trademark rights may exist), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer or entirely on the remote computer or server. In the latter scenario, the remote computer m ay be connected to the user's computer through any type of network, including a local area network (LAN) or a wide area network (WAN), or the connection may be made to an external computer (for example, through the Internet using an Internet Service Provider).

Aspects of the present inventions are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer, other programmable data processing apparatus, or other devices to function in a particular manner, such that the instructions stored in the computer-readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer-implemented process such that the instructions which execute on the computer or other programmable apparatus provide processes for implementing the functions/acts specified in the flowchart and/or block diagram block or blocks.

The demand for transformation projects is picking up speed. This is especially applicable to transformation projects involving the vendor SAP SE whereby such transformations are usually upgrades between the SAP ERP ECC6.0 system and the newer SAP ERP S/4 HANA. Existing customers encounter a key obstacle: the insufficient supply of specialist consultants and migration specialists.

In recent years, it has become a convention to use color to indicate the different possible system migration approaches. The color spectrum ranges from brownfield to greenfield with a wide variety of shades in between. At one end of this spectrum is the brownfield approach. This means the complete takeover of the previous data structures, business objects and individual adjustments as well as in-house developments including the complete legacy data stock.

At the other end, a new start on a green field is possible. In this approach, known as the Greenfield Approach, companies start from scratch with data structures, business objects, and customizations as they see fit for their own business future. If the companies want to take over data from the legacy systems with this approach, they have two options: either they transform all this data with great effort or only the master data and the open items. In both cases, however, the original data collected to date remains in the legacy systems, which then have to be operated in parallel for longer periods of time for legal and business reasons.

Both extremes have their justification, but also significant disadvantages. Companies with a homogeneous system landscape, i.e. without external systems and different release statuses, which do not want to change their previous business and therefore consciously avoid changes and innovations, find their optimal method for the transformation to SAP S/4HANA in the brownfield approach.

In the case of large existing SAP customers, however, the system landscapes are usually so heterogeneous and the data stocks so extensive that their conversion with the brownfield approach seems to be uncomplicated from a technical point of view. But appearances are deceptive: for this, many prerequisites have to be created in the source systems in preliminary projects, some of which are complex. This includes, among other things, the adjustment of individual developments or the activation of new business logic. In addition, many test runs are necessary, in which the specialist departments must also be involved in order to avoid errors. In addition: The conversion of the usually very large amounts of data usually requires immense computing capacities, including high costs. Against this background, it is no longer surprising that many existing SAP customers have trouble justifying the business case of an SAP transformation project.

From a business point of view, the dependencies between the data, their structures and original systems, but also between interfaces between different systems, are even more serious. Incidentally, this also includes data that is unfortunately mostly hardwired to outdated or numerous organizational units, document types and processes that are no longer relevant. In many cases, this data may account for up to 90 percent of the entire database. In fact, the dependencies are so great that they nullify the chance for a fresh start or the laying of the foundation for new business models and processes that management in most cases associates with the generational change.

Incidentally, solving this fundamental problem of dependencies only has the slightest chance of success, whether the companies are trying to solve it at the source system level, i.e. before the switch, or afterwards. This is because it is practically impossible to clean up master data with relationships to outdated data structures, let alone achieve a harmonized, i.e. cross-system view of the master data, which is usually distributed across several different source systems. The reason is that existing SAP customers have to contend with extreme dependencies such as thousands of unclosed documents when using this method; in some cases it may no longer be possible to get the data out of the archives, the technology of which in many cases dates back many decades.

In short: The linking of master data with transaction data and individual adjustments in the legacy systems prevents or at least makes it extremely difficult to clean them up. And since the relevant master data can usually not only be found in one, but in several and different systems, the problem multiplies. Because these different master data from different systems would first have to be harmonized before the conversion, which in turn prevents dependencies. The vicious circle is perfect. Overall, however, the associated effort for both the specialist departments and IT cannot be justified in practice.

In a classic brownfield scenario after switching to SAP S/4HANA customers have to instruct their business users to do it. If we assume that a business user needs ten minutes to check and clean up a master data record, then the company has to plan over 10,000 working days for a master data stock of 500,000 individual data records assuming an eight-hour day. Of course, this task can be spread over many shoulders. Nevertheless, the associated effort is considerable. Because the problem of linking different data types with each other and with the systems does not only exist in the source systems, but also in the target systems. Solving the problem is also technically hardly possible there.

When it comes to transactional data, things are equally problematic. The ERP landscapes of the large existing SAP customers in German-speaking countries have grown over the past ten to twenty years. Even if one assumes that the companies need the data stock of the entire past year in SAP S/4HANA for further processing, with a brownfield approach they convert 90 to 95 percent of the data completely free of charge. Furthermore this legacy data weighs down the new system very significantly, which ties up enormous computing and memory resources, but still leads to poor runtimes and greatly increases the maintenance and operating costs, especially for updates or upgrades. All in all, the basis for the optimization of data quality on the one hand and the modernization of processes on the other hand is almost completely eliminated.

In contrast, the greenfield approach has undeniable advantages. Companies with a very heterogeneous system landscape and large databases in particular benefit from this if, for example, they completely change their business model and start from scratch almost like a startup. Or if they fundamentally reorganize their structures and processes from a centralized to a decentralized organization.

It is true that best-practice approaches that promise extensive standardization are tempting. But many existing SAP customers also fear this, as it threatens to devalue the high investments that are made in the bespoke versions of the old systems, including customer-specific developments and the resulting optimized processes. After all, existing SAP customers have made these investments to gain unique competitive advantages. The effort involved in replicating this in the new software generation is enormous. Here, too, the business case usually does not pay off.

With the greenfield approach, the alternative would be to exclusively transfer the open items and master data. However, this often leads to a massive acceptance problem within the company. Because users at all levels up to the CFO want easy access to all legacy information for business reasons, and this on two conditions: They want to access it from "their" interface and not jump back and forth between different solutions. Also, you want the legacy information to look the same as if it was created in the new system. Basically, both conditions speak again for a brownfield approach, which the CIOs and their management colleagues prefer to avoid in favor of change and innovation.

In terms of transformation, the most diverse color gradations between brown and green have meanwhile established themselves. What they all have in common, however, is the fact that only part of the legacy data is transformed and transferred to the new world. In principle, this approach is correct in order to reduce the effort involved in both the transformation and the migration. In addition, it basically offers the flexibility to optimize the future system independently of master and transaction data in a kind of combination of brownfield and greenfield approach. The selective data transfer is certainly the right thing for those existing SAP customers with a large system landscape who, despite adjustments, largely rely on continuity and want to build the new landscape largely on the predecessor systems.

However, the specialist departments also want to be able to see and access all historical data in the new system. Companies have never needed access to their historical information going back decades more than they do today. The digital economy means that commercial offerings are increasingly made up of products, supplementary services and maintenance services. Such complex offerings have life cycles of between ten and fifty years. Historical information, even if it dates back many years and is no longer changed in day-to-day business, has the same relevance as operational information for product development and the continuous optimization of offers and their quality based on data analysis.

However, from the point of view of the project managers responsible for the SAP transformation, this desire of the specialist departments cannot be fulfilled. More than the transfer of the data from the last two or three years is not possible in order to retain the flexibility to at least partially adapt and optimize the new system.

But even if IT prevails over business, the selective data transfer proves to be suboptimal in many cases: Firstly, this approach works primarily when the source and target systems are very similar, i.e. when it is between the latest ECC version, for example and SAP S/4HANA is applied. Second, the selective data transformation tools that work at the table level can introduce the risk of inconsistencies. This risk can be contained with a very high level of testing. But even that usually only helps to a limited extent when cleaning up the data in order to optimize its quality for the new system world. Accordingly, existing SAP customers only have a few options for ensuring a harmonized database that is fed both from data from the SAP legacy systems and from third-party systems. However, this possibility of harmonization is an essential prerequisite for realizing the goal of a data-driven company - not to mention that with the approach of selective data transfer analogous to the brownfield approach, a change to the public cloud or a (partial) change to a system of a third-party manufacturer is only possible to a very limited extent.

The fact that the data and their dependencies represent the fundamental challenge in the SAP generation change is a realization that is currently breaking ground in the SAP community. The ideal would be a transformation path that is technically as uncomplicated as the brownfield approach, but as flexible as the greenfield method, in which the companies cut old habits, implement new business processes and models and only transfer master data of the best quality to the new system be able.

The present inventors have realized that a one-click type solution which combines the advantages of both the greenfield and the brownfield approach is possible. The prerequisite, however, is that the transformation at the application level takes place independently of the data level. For this purpose, all legacy information together with its business context must be able to be removed completely, unchanged and above all efficiently and quickly and transferred to its own platform. After that, existing SAP customers are free to choose whether they want to take their previous application environment with all existing business objects, adjustments and in-house developments into the new S/4 world (brownfield) or start from scratch (greenfield).

For this purpose, that part of the information from the legacy systems that is also required in SAP S/4HANA must be filtered out on a separate platform according to business criteria, cleaned up, and data from third-party systems can be enriched and optimized. While only five to ten percent of the transaction data usually has to be transformed and migrated to SAP S/4HANA after optimization, the amount of master data is reduced to an estimated twenty percent, which can then also be processed in optimal quality using standard tools such as the Migration Cockpit be taken over by SAP. Of course, all of this has to be largely automated.

The platform must be able to display the historical data in the SAP S/4HANA world via SAP GUI or SAP Fiori as if it originated there. This on-the-fly transformation using the "technical structure mapping" procedure (which is realized by a JOIN repository), of course without changing the original structure of the historical data on the platform itself - may also take place automatically. This level of automation from data extraction to display in the new environment is the essence of a one-click transformation.

Although not entirely dissimilar to the selective data acquisition approach, the one-click transformation has significant additional advantages:

First, all data - historical and operational - can be cleaned up, easily enriched with data from third-party sources and optimally prepared for big data and analytics scenarios. Incidentally, this applies not only to the transactional data, but also to all master data, including the customer, supplier, article and material masters that are so important for the digital transformation.

Second, in addition, the decision as to which data from the previous database should be transformed and migrated to SAP S/4HANA is made flexibly according to the customer's relevant business criteria. So instead of, for example, taking over all the data from the last three years, existing customers can consciously decide only to transform and migrate the open orders and master data for customers and suppliers with whom they have ongoing business relationships.

Third, Chief Financial Officers (CFOs) can also be appeased in this scenario: Because when CFOs and specialist departments argue that they need all the old data in the new system, then there is a misunderstanding here: what they really need, is not the historical data in the new system, but "only" access to it from the SAP S/4HANA interface. With the one-click transformation approach, this is easy to do. Users don't even realize when they access historical data that it is not actually stored in the SAP HANA database.

A clean and transparent database for competition in the digital economy, a massive reduction in the data to be transformed and migrated and its transfer with the standard tools from SAP are just a few of the advantages of this approach. In addition:

Fourth, after the historical information has been transferred to the separate platform, the legacy systems and applications can be completely shut down. As a rule of thumb, this eliminates 80 percent of the operating costs. The time and cost of actual data filtering, transformation, and migration is cut in half.

Fifth, since the data newly added to the SAP S/4HANA world can be continuously transferred to the platform, the new environment and in particular the SAP HANA in-memory database remain lean in the long term. The savings potential that can be achieved through this continuous rightsizing is likely to be 25 percent or more over the entire life cycle of the new environment.

Sixth, a one-click transformation can also help those customers who have opted for the classic approaches of brownfield, greenfield and selective data transition and have already taken initial measures. Because it complements these processes with their specific advantages, starting with the identification and design of filter rules, through the historization, preparation and harmonization of the data, to their integration into SAP S/4HANA. In addition, it enables the complete decommissioning of legacy systems, including corresponding savings in operating costs.

In all of this, audit requirements must not be forgotten. All historical data and documents are stored on the platform in an audit-proof manner. In addition, a platform that supports the one-click transformation approach offers the possibility of managing the stored information down to the level of the individual data record or document over its entire life cycle until legally secure deletion after the applicable retention periods have expired. This also allows the increased legal requirements such as the targeted deletion regulations of the European General Data Protection Regulation (EU-GDPR) to be met.

The one-click transformation approach is particularly characterized by the consistent and continuous separation of historical data from operational data. In this way, the fundamental problems of the dependencies described can be solved. In addition, the platform that supports this approach preserves the transformation knowledge and makes it permanently available: for accessing historical data from SAP S/4HANA, for accessing historical data from non-SAP systems and making data available for third-party applications such as analytics solutions.

Incidentally, the data transfer to a separate and modern platform also contributes to greater security because, unlike some legacy systems, this platform can also be patched in the future. Because many legacy systems have to be operated on old software releases and therefore usually need outdated operating systems and databases. In many cases, however, the manufacturers no longer provide any security patches for these.

In addition, such a platform can serve as a digital repository for business-relevant data and its context, which are created in SaaS and other cloud solutions, where the rights to this data do not lie with the companies, but with the providers of these solutions - thus access to this data is retained even after the subscriptions have been terminated. After all, such a platform lays the foundation for IoT scenarios or digital twins of products, machines & systems, buildings, etc., which - enriched with operating data - can decisively improve their manufacture, operation, maintenance and management. All of this is made possible because such a platform keeps historical information together with its business context, but independent of its originating systems. The large number of failed data lake projects, in which the business context is missing, shows that this platform approach is far better able to cope with the future requirements in terms of enterprise-wide data management. This brings existing SAP customers a good deal closer to the goal of a data fabric recommended by analysts.

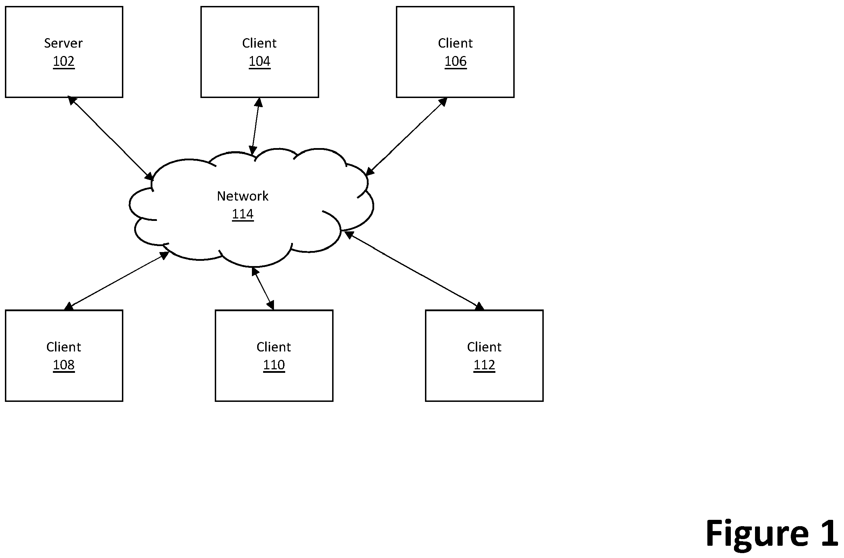

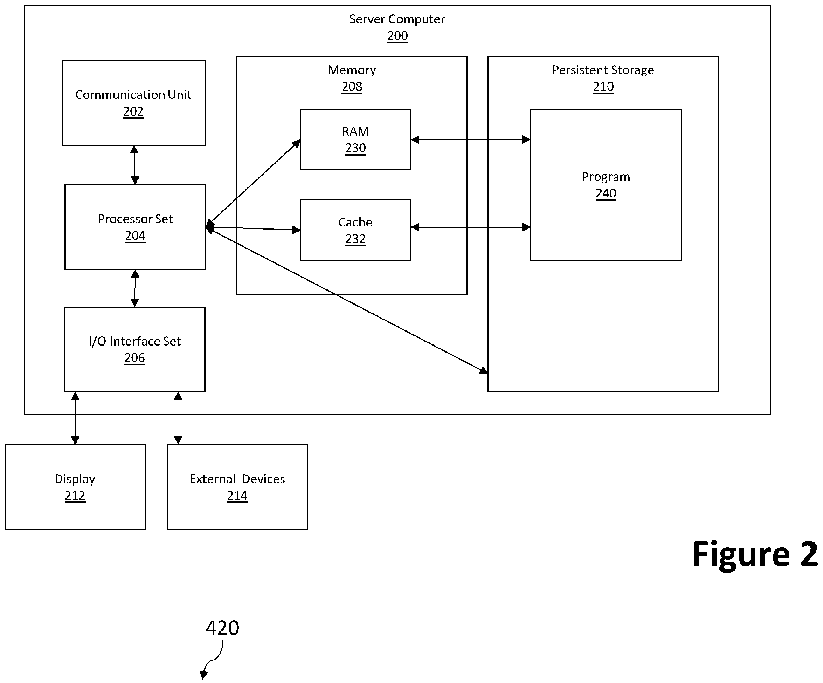

An embodiment of a possible hardware and software environment for software and/or methods according to the present inventions will now be described in detail with reference to the Figures. FIGS. 1 and 2 collectively make up a functional block diagram illustrating various portions of distributed data processing system **100**, including: server computer sub-system (that is, a portion ofthe larger computer system that itself includes a computer) **102**; client computer sub-systems **104**, **106**, **108**, **110**, **112**; communication network **114**; server computer **200**; communication unit **202**; processor set **204**; input/output (i/o) interface set **206**; memory device **208**; persistent storage device **210**; display device **212**; external device set **214**; random access memory (RAM) devices **230**; cache memory device **232**; and program **240.**

As shown in FIG. 2, server computer sub-system **102** is, in many respects, representative of the various computer sub-system(s) in the present inventions. Accordingly, several portions of computer sub-system **102** will now be discussed in the following paragraphs.

Server computer sub-system **102** may be a laptop computer, tablet computer, netbook computer, personal computer (PC), a desktop computer, a personal digital assistant (PDA), a smart phone, or any programmable electronic device capable of communicating with the client sub-systems via network **114.** Program **240** is a collection of machine readable instructions and/or data that is used to create, manage and control certain software functions that will be discussed in detail, below, in the First Embodiment sub-section of this Detailed Description section.

Server computer sub-system **102** is capable of communicating with other computer sub-systems via network **114** (see FIG. 1). Network **114** can be, for example, a local area network (LAN), a wide area network (WAN) such as the Internet, or a combination of the two, and can include wired, wireless, or fiber optic connections. In general, network **114** can be any combination of connections and protocols that will support communications between server and client sub-systems.

It should be appreciated that FIGS. 1 and 2, taken together, provide only an illustration of one implementation (that is, system **100**) and do not imply any limitations with regard to the environments in which different embodiments may be implemented. Many modifications to the depicted environment may be made, especially with respect to current and anticipated future advances in cloud computing, distributed computing, smaller computing devices, network communications and the like.

As shown in FIG. 2, server computer sub-system **102** is shown as a block diagram with many double arrows. These double arrows (no separate reference numerals) represent a communications fabric, which provides communications between various components of sub-system **102.** This communications fabric can be implemented with any architecture designed for passing data and/or control information between processors (such as microprocessors, communications and network processors, etc.), system memory, peripheral devices, and any other hardware components within a system. For example, the communications fabric can be implemented, at least in part, with one or more buses.

Memory **208** and persistent storage **210** are computer-readable storage media. In general, memory **208** can include any suitable volatile or non-volatile computer-readable storage media. It is further noted that, now and/or in the near future: (i) external device(s) **214** may be able to supply, some or all, memory for sub-system **102**; and/or (ii) devices external to sub-system **102** may be able to provide memory for sub-system **102.**

Program **240** is stored in persistent storage **210** for access and/or execution by one ormore of the respective computer processors **204**, usually through one or more memories of memory **208.** Persistent storage **210**: (i) is at least more persistent than a signal in transit; (ii) stores the program on a tangible medium (such as magnetic or optical domains); and (iii) is substantially less persistent than permanent storage. Alternatively, data storage may be more persistent and/or permanent than the type of storage provided by persistent storage **210.**

Program **240** may include both machine readable and performable instructions and/or substantive data (that is, the type of data stored in a database). In this particular embodiment, persistent storage **210** includes a magnetic hard disk drive. To name some possible variations, persistent storage **210** may include a solid state hard drive, a semiconductor storage device, read-only memory (ROM), erasable programmable read-only memory (EPROM), flash memory, or any other computer-readable storage media that is capable of storing program instructions or digital information.

The media used by persistent storage **210** may also be removable. For example, a removable hard drive may be used for persistent storage **210.** Other examples include optical and magnetic disks, thumb drives, and smart cards that are inserted into a drive for transfer onto another computer-readable storage medium that is also part of persistent storage **210**.

Communications unit **202**, in these examples, provides for communications with other data processing systems or devices external to sub-system **102**, such as client sub-systems **104**, **106**, **108**, **110**, **112**. In these examples, communications unit **202** includes one ormore network interface cards. Communications unit **202** may provide communications through the use of either or both physical and wireless communications links. Any software modules discussed herein may be downloaded to a persistent storage device (such as persistent storage device **210**) through a communications unit (such as communications unit **202**).

I/O interface set **206** allows for input and output of data with other devices that may be connected locally in data communication with server computer **200.** For example, I/O interface set **206** provides a connection to external device set **214.** External device set **214** will typically include devices such as a keyboard, keypad, a touch screen, and/or some other suitable input device. External device set **214** can also include portable computer-readable storage media such as, for example, thumb drives, portable optical or magnetic disks, and memory cards. Software and data used to practice embodiments ofthe present invention, for example, program **240**, can be stored on such portable computer-readable storage media. In these embodiments the relevant software may (or may not) be loaded, in whole or in part, onto persistent storage device **210** via I/O interface set **206.** I/O interface set **206** also connects in data communication with display device **212.**

Display device **212** provides a mechanism to display data to a user and may be, for example, a computer monitor or a smart phone display screen.

The programs described herein are identified based upon the application for which they are implemented in a specific embodiment of the inventions. However, it should be appreciated that any particular program nomenclature herein is used merely for convenience, and thus the inventions should not be limited to use solely in any specific application identified and/or implied by such nomenclature.

The flowchart and block diagrams in the following Figures illustrate the architecture, functionality, and operation of possible implementations of systems, methods and computer program products according to various embodiments of the present inventions. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

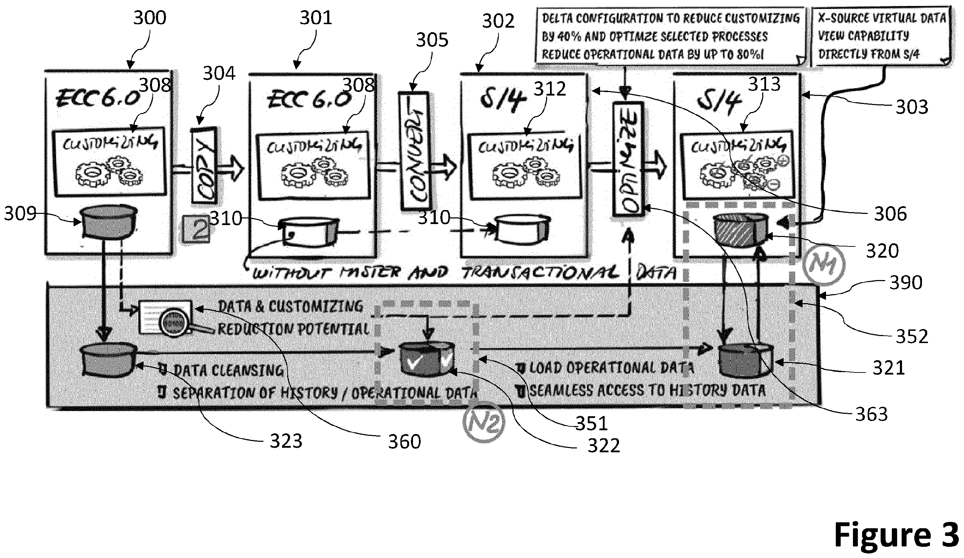

Fig. 3 depicts a combined block diagram and flowchart giving a general overview of the innovative data migration technique. Specific examples of innovative departures from the prior art have been marked in dashed lines. The innovative departures of the present inventions, however, are not limited to those explicitly marked. The diagram also illustrates a preferred embodiment wherein the migration source is an SAP ERP ECC6.0 system **300** and the migration taget is an SAP S/4 HANA ERP system **302 303.** The source system comprises a data store **309**. The data may be stored as a set of relational tables. The source system also comprises customizing **308** for customizing the generic source system to specific customer requirements and preferences. Said customizing is technically also stored in relational tables which in turn are part of the data store **309.** As one of the first steps the data contained in data store **309** is extracted and transferred to a data store of an archive system outside the system boundaries of source system **309**. Then a fresh data-less instance of the source system is created, in the case of a preferred embodiment with an SAP ECC6.0 source system this may be achieved by using a so-called client copy. A client is a self-contained unit in commercial, organizational, and technical terms, with its own user master data and set of table key ranges.

Data from different clients is kept separate at the kernel level. SQL statements executed by an application use the client number in the where-clause. Although a table may contain data from several different clients, the where-clause limits access to particular clients. Examples of client-specific data include: User master data - such as parameters, authorization, user groups, customizing data - such as organizational units, assignments, and document types and application data- such as business transaction data, and material master data. Data of the Source System can be divided into two broad categories:

Client-specific data is data affecting only one client, such as user master and application data.

Cross-client data is data affecting the whole system environment, such as cross-client Customizing data. In the preferred embodiment wherein an SAP ECC6.0 system serves as the source system, a client copy may be executed by using standard transaction SCC4 to create a new instance of the source system (either on the same application server or on another application server), creating a Remote Function Call (RFC) connection between the two application servers if a separate application server is used und using transaction SCCL to start data transfer. It is during a client copy operation wherein the data which is to be copied to the new client is being specified. In the depicted embodiment of the invention a client copy profile is chosen, which will only copy data excluding master data and transactional data to the system depicted as 302. Those skilled in the art will realize that the principles of the invention can be applied to any migration of a computer-implemented enterprise resource planning system, business data warehouse or customer relationship planning system which comprises both master data and transactional data.

As a next step the system copy **301** which only contains data excluding master data and transactional **data 310** and yet includes the source customizing **data 308** is transferred to the target system (an SAP S/4 HANA ERP system in a preferred embodiment) by means of a conversion process **305.** The conversion process comprises an in-place upgrade and a migration. In-place upgrade enables the user to keep the same hardware and all the data without wiping and reinstalling the operating system, keeping settings, roles, features, and data intact. However, not every source system has a pathway to every newer target system. Migration is when one role or feature at a time is moved from a source system to another destination system. For these purposes, migration is defined as moving one role or feature and its data to a different system, not upgrading the feature on the same system. In the case of a preferred embodiment with SAP S/4 HANA as the target system it has to be considered that SAP S/4HANA is only supported on the SAP HANA database. If the source system is running on another database, the ECC6.0 source system can still be converted to SAP S/4 HANA by using the Data Migration Option of the SAP Software Update Manager (SUM) tool. This one-step procedure combines a system conversion with a database migration. The result of the conversion is system **302** which comprises updated customizing data **312**. As part of the innovative departure an optimization step **363** is executed wherein the optimization comprises a reduction of customizing. On the archiving system **390** an analysis is commenced after data has been extracted to data store **323.**

Said analysis is carried out by program module **360** and the analysis is centered on identifying the reduction potential of both master data, transactional data and customizing data. Program module **360** is also capable of interfacing directly with the target system **302** by means of remote access, normally via executing Remote Function Calls (RFCs) or Remote Procedure Calls (RPCs). Using remote access Customizing Data is optimized, by removing superfluous customizing and/or adding customizing data and/or updating existing customizing.

Once the extracted data is available in the archive data store **323** it is subject to both data cleansing and/or the separation of transactional data into history data and operational data. Moreover module **360** is also analyzing data reduction potential and said module is capable of deleting data in data store **322**, whereby data store **322** stores data which has been subject to said cleansing, reduction and separation operations. As a follow-up step the separated out operational data is loaded into the operational database **320** of target system **303.** Likewise the separated out history data is transferred into a permanent archive database **321.** In an innovative departure from the prior art the target system provides user interfaces which perform a set-logic UNION between the history data stored in the archive database **321** and the operational data stored in the operational database **320.**

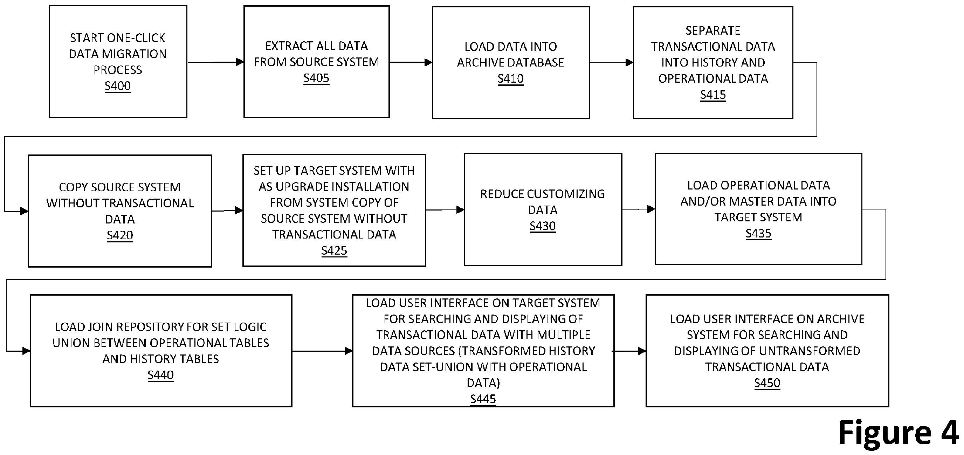

Fig. 4 shows a flowchart depicting a computer-implemented method according to embodiments of the present inventions. FIG. 2 shows program 240 for performing at least some of the method steps of Fig. 3. Program 240 is divided into modules, each of which is present in persistent storage 210 (see FIG. 2) and each of which is responsible for one or more aspects of the methods presented in FIGS. 3, 4 and 5. Those skilled in the art will recognize that other divisions of responsibility are possible, and that all modules need not reside in the same persistent storage unit or even on the same computer.

In step **S400** a one-click combined data migration and data archiving process is started. The prior art teaches a large variety of different techniques to migrate one enterprise resource planning (ERP) system to another one, but what prior-art approaches have in common is that they are heavily parametrized, in such a way that the user has to manually set large numbers of parameters in a migration project. Sometime a vendor of an ERP system is offering an automated version upgrade migration path, which may only require a minimum of manual parametrization by a migration user, but even in such a setting data archiving is not normally a by-product of migration. The present inventors have realized that it is possible to combine ERP migration with data archiving in what amounts to a single-click process. The end result is a streamlined target system, which is more performant than the source system due to the fact that it is no longer weighed down with history data in the operational database. At the same time, the user experience is unchanged, since a search for transactional data returns history data and operational data in such a form that the average user is unaware that transactional data has been split into operational data and history data residing at separate data stores.

In step **S405** all source data, comprising master data, customizing data and transactional data is extracted from a source system. Master data represents data about the business entities that provide context for business transactions. The most commonly found categories of master data are parties (individuals and organizations, and theirroles, such as customers, suppliers, employees), products, financial structures (such as ledgers and cost centers) and locational concepts. Transactional data describe an internal or external event or transaction that takes place as an organization conducts its business. Examples include sales orders, invoices, purchase orders, shipping documents, passport applications, credit card payments, and insurance claims. Customizing data is data created by customers when they customize their systems. Customizing data can be stored in relational table format, similar to how transactional data and master data is stored. In an exemplary embodiment the source system is an SAP ERP ECC6.0 system and data is extracted by first loading a data extraction module, implemented as an ABAP program onto the SAP ERP system and then starting the ABAP program, which then reads tables in the underlying database with OpenSQL statements, such as "SELECT ^{∗} FROM BSEG" for example. A result set is returned in binary format and the result set is translated into a text format (such as CSV, XML or JSON, for example). The resulting text is the written to one or more files on a file system. Those skilled in the art will realize that many alternative ways exist to extract data from a database table. It is not necessary to write the extracted data to a file since tools exist which allow a direct transfer of data between a database in a source system and an archive database. Microsoft SQL Server Migration Assistant (SSMA) is but one example of such tools.

In step **S410** the data which has been extracted in the previous step is loaded into a relational archive database. In a preferred embodiment Microsoft SQL Server Migration Assistant (SSMA) is being used to transfer extracted data (in CSV-formatted text format) into respective MSSQL tables on an archive database.

In step **S415** the transactional data which has been extracted with the first step is separated into history data and operational data.

Historical data, in a broad context, is collected data about past events and circumstances pertaining to a particular subject.

By definition, history data includes most data generated either manually or automatically within an enterprise. Sources, among a great number of possibilities, include financial documents, ledgers, audit logs, sales orders, customer purchases, etc.

Not all history data is old and much of it must be retained for a significant amount of time. Because that data storage requires resources to maintain, data life cycle management (DLM) is recommended to try to ensure that data is not maintained without good reason or for longer than necessary and that it is properly archived or disposed of as appropriate.

Transactional data are information directly derived as a result of transactions. Rather than being the object of transactions like the product being purchased or the identity of the customer, it is more of a reference data describing the time, place, prices, payment methods, discount values, and quantities related to that particular transaction, usually at the point of sale.

Unlike other sorts of data, transactional data contains a time dimension which means that there is timeliness to it and over time, it becomes less relevant. An arbitrary threshold of such timeliness marks the boundary between transactional data and operational data.

The present inventors have realized that in a migration context it is desirable to separate transactional data into history data and operational data, transfer the history data to a cost-efficient read-only archive database, and to transfer the operational data to the target system of the migration. Unlike prior art approaches, however, the goal is to provide a singular user interface to a user, which means that the user can access transactional data on the target system in a way that the user can see no division between history data and operational data. In other words, it appears to the user that the history data has never been migrated to an archive. Therefore the user can operate the target system in the same way as if the history data were part of the operational data.

The separation of transactional data and history data is accomplished in an exemplary embodiment by mapping tables to business objects which have a time dimension. For example a finance document business object may be mapped to a BKPF header table on a SAP system and a plurality of line items in the BSEG table, wherein the line items are accompanied by a timestamp field. Those skilled in the art will realize that a timestamp associated with a business object allows identifying which lines in which constituent tables of the business object should be flagged as history data, provided an arbitrary cutoff date has been specified. The cutoff date specifies the temporal boundary between what is considered history data and what is operational data. It is also important to note that the cutoff date may be different for different business objects, for example it is possible to specify that all business objects of type "finance document" are considered history data after 12 years whereas all business objects of type "production order" are considered as history data already after 6 years. It is also possible to add special exceptions for individual instances of a business object, i.e. "finance document" business object with document number "4711" is to be considered as operational data up to 20 years, or even for an unlimited time, whereas all other "finance document" business objects are to be considered history data after 12 years.

Separation of operational data and history data on a technical level is accomplished in an exemplary embodiment by running a stored procedure on the MSSQL database which is programmed to group tables into business objects and check if a date field on one of the tables comprised in the business object has a value less than the cutoff date for dividing history data and operational data. For example the stored procedure can be programmed divide the extracted data into two schemas which each contain the same tables, one schema is for history data and the other schema is for operational data. All data older than two years (the arbitrary cutoff selected as the dividing line between history and operational data) is copied to the tables in the schema for history data and all other data is copied to the schema for operational data. Those skilled in the art with realize that many different ways are known which can accomplish the goal of grouping sets of tables into business objects and separating the data contained therein in separate data pools for either history data or operational data.

Step **S420** involves copying the source system without transactional data. In a preferred embodiment the source system, realized as an SAP ERP ECC6.0 system, was copied by first performing a clean install of a new system with the same component version as the source system. Then a so-called client copy was performed with SAP standard program SCC8 to copy data, including transactional data, from the source system to the system copy. Those skilled in the art will realize that the same technique applicable to any ERP system which is capable of transferring transactional data between two instances or two installations of the same version of the ERP system, wherein one instance, is the result of a clean install without data.

Step **S425** involves setting up a target system with an upgrade-type installation. In a preferred embodiment the target system is an SAP S/4 HANA ERP system. The upgrade-type installation is performed in such away that the data-less system copy of the previous step is used as the basis for the system upgrade. An advantage of upgrading without master data and transactional data is that vendor provided migration routines provided a maximum of assistance with system transformation without the disadvantage of migrating aged data which would slow down the new system and carry a large amount of excess data which is difficult to remove after a system upgrade. Customizing data, however is transferred and transformed as part of the upgrade step, which is desirable since customizing is generally very system-specific and version-specific. Hence it is normally most efficient to follow a vendor-defined upgrade path as far as the customizing data is concerned, but to leave out master data and transactional data.

Nevertheless, it is desirable to reduce customizing data to a maximum extent. The present inventors have realized that contrary to master data and transactional data it is most advantageous to reduce customizing data after it has been imported into the target system following an upgrade path.

Hence step **S430** involves reducing customizing data after it has been imported into the target system via an upgrade path. Custom izing data is normally stored in relatively small relational tables on the source database. In a preferred embodiment an automated pruning program, written in ABAP, is used to remove surplus customizing data without the need for manual intervention, hence satisfying the one-click migration paradigm. In order to be able to run said pruning program, the program has to be automatically installed on the target system. In the case of the preferred embodiment the target system is an SAP S/4 HANA ERP system whereby the pruning program is transported to the target system by importing a so-called SE09 Transport-of-Copies transport request with transaction STMS into the target system and then scheduling it to run as a background job using SAP standard transaction SM36. All ERP systems have tables with customizing data and the same principle can be extended to other non-SAP ERP systems as well by automatically installing and running a pruning script or pruning program, which can be written in any programming or scripting language.

Step **S435** involves loading the operational data into the target system. Loading the operational data is not a straightforward task because of the fact that the table schema in the target database of the target system will be different to that of the source database, hence a transformation will be required before the operational data can be loaded. In a preferred embodiment, wherein the source system is a SAP ECC6.0 system and the target system is a SAP S/4 HANA system the transformation is accomplished via a vendor-provided upgrade workflow, in this case SAP S/4HANA Migration Cockpit (MC). There are several other options for transferring datasets to an SAP system. These include batch input, direct input, IDoc input, records, BADIs and ALE. All of these procedures are available when using SAP LSMW (Legacy System Migration Workbench).

However, the SAP S/4HANA Migration Cockpit is increasingly being used. The Migration Cockpit is a component of SAP S/4HANA. It simplifies the migration process by providing ready-made templates.

In any case, master data must first be migrated to the new system. Only then can the transaction data be transferred to the production system at a defined time.

Using MC source data can be provided as CSV-format text files for example. The text files are loaded into MC which provides preconfigured migration objects and mapping, generation of migration programs, data validation and integration of custom objects. After transformation of the source data to the schema of the target data, the source data is loaded into the target database using APIs provided by MC. The loading of data may be also done by loading the operational data into a fresh installation of an instance of the source system, which in case of the preferred embodiment is realized as a SAP ECC6.0 system. The advantage of loading operational data first into a fresh empty instance of the source system is that the table schema is identical to the source system and that the vendor is providing an easy to use upgrade solution to the target system. In case no vendor provided upgrade is available, the data has to be loaded into the target database using a transformation solution. In a simple case where only the types and names of columns are different a solution similar Microsoft SSMA can be used, otherwise a bespoke program is normally used which employs a repository of mapping rules, wherein the mapping rules define how each field of each source table has to be mapped to the target schema of the target database.

Step **S440** involves providing a JOIN repository for joining operational tables with their equivalent history tables. An innovative feature of the present inventions is that a user can use a single user interface, normally hosted within the target system, to search and display business objects. The advantage for a user is that familiar search interfaces, normally provided by the target system, can be used without the user being necessarily aware that archive data is interspersed with operative data. However, for this principle to work, it is necessary that the database schema of the archive database containing history data is made compatible with the database schema of the target database containing the operative data. There are principally two options of making the respective schemas compatible. The preferred embodiment uses a JOIN repository to said schemas compatible which each other, in the sense that they may be queried with a single query. In the preferred embodiment a JOIN repository may be implemented by a set of enhancements of standard search and display coding. An enhancement in the context of the preferred embodiment realized as part of the SAP Enhancement Framework. The SAP Enhancement Framework provides a technology for enhancing source code units without modifying them. The basic mechanism is to offer the so-called enhancement options in development objects. These enhancement options function like "hooks" where the user can attach their enhancements. When an enhancement is assigned to a portion of vendor-standard source code, at runtime the enhancement is processed when the control flow reaches the said portion. At runtime the enhancement behaves as if it belongs to the development object it enhances. In the context of the preferred embodiment the vendor-standard source code processes a search and display request from the vendor-standard user interface by processing a series of SQL statements, normally in the SAP-standard OpenSQL syntax. The JOIN repository in the preferred embodiment uses an enhancement to modify SAP-standard search queries by inserting a logical join with tables from the archive database. Normally a direct, database-level, connection to the archive database is not possible from the target system, in which case no SQL-type JOIN can be used and a logical join between the result sets of two or more SELECT statements has to be used instead. A logical join accomplishes the same set theory as an SQL language JOIN by coding in the application layer. Typically, this is accomplished by retrieving a first data set from the operative table by means of an SQL SELECT statement and a second data set from the history table by means of a SELECT statement which is returned via a webservice call and then using application layer coding to perform a logical join between these two data sets. Once the JOIN has been accomplished, the control flow of the program normally is resumed as per vendor standard. It is important to differentiate between prior art at this point. The software vendor SAP has a solution whereby history data is interspersed with operative data by using the so-called ADK technology in combination with the so-called ArchiveLink interface. ADK technology involves deleting history data from the operative database and saving the deleted data to a compressed file format in the form of an ADK file. When making a query for transactional data in an SAP ERP system then (optionally) both the operative database and the ADK files containing history data are queried simultaneously, with the results being logically joined per a set theory UNION operation. An innovative departure of the present invention is that the history data is stored in a relational database as opposed to a file-based sequential format. Hence in an innovative departure the logical UNION is between the result sets of two or more SQL-type SELECT statements.

Step **S445** involves loading a user interface on the target system for searching and displaying of transactional data with multiple data sources, specifically transformed history data being joined to operational data by a set-logic UNION operation. The data source for the history data is the archive database comprising a copy of the transactional data on the source system. With the modules which comprise the JOIN repository a transformation is accomplished which transforms the data in the archive database into a format which allows a set-logic UNION with operational data in the target system. It should be noted that such transformation faces a series of technical and logical obstacles and as a result of these obstacles the transformation may not be complete. In other words, there may be a relatively small number or fields or even dependent tables which remain unmapped. In terms of usability this does not make much of a difference to the average user as long as the fields which are of high significance in a business context are available. The present inventors however have realized that a second interface is required to the archive database which provides access to the untransformed original archive data. This untransformed access is indispensable because of the requirement for auditors to have access to the original data. Hence while it is advantageous for business users to access the history data as part of a set-logic UNION with operational data, it is equally advantageous for auditors to being able to access untransformed history data through a separate interface.

Hence step **S450** is concerned with loading a user interface on an archive system for searching and displaying of untransformed transactional data. In a preferred embodiment the interface for accessing untransformed history data is implemented as a JDBC interface to the archive database with a business layer written as JAVA module and an HTML5-based web display, hosted on a Tomcat 5 application server within the boundaries of the archive system.

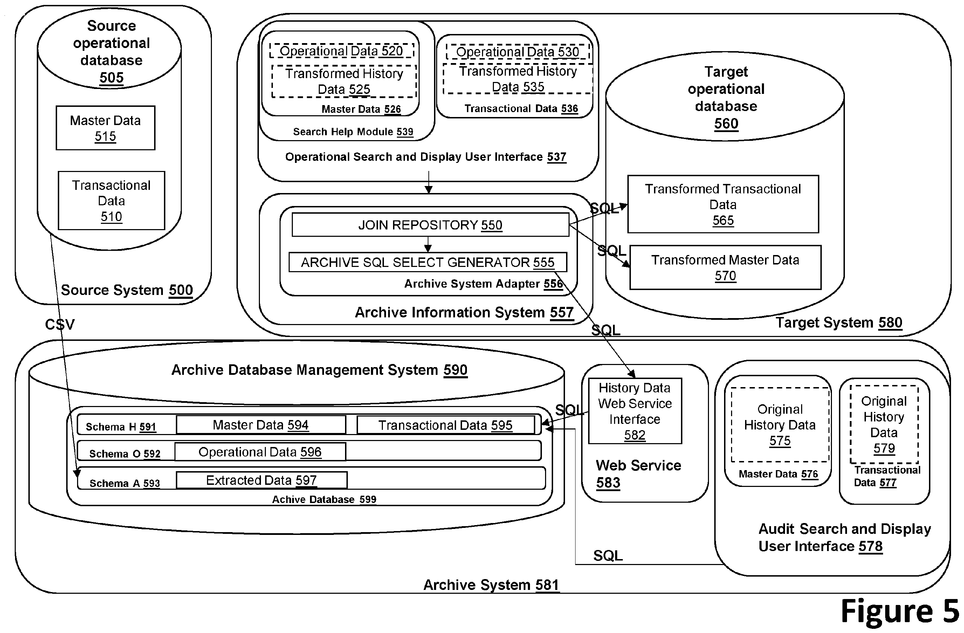

Fig. 5 depicts a system diagram which is overlaid with a flow diagram to illustrate both data flow and corresponding system architecture. The diagram focuses on the aspect of transactional data. A source system comprises a source operational database which in turn comprises transactional data. In a preferred embodiment the source system **500** is used is an ERP system produced by the vendor SAP in version ECC6.0. The source operational database **505** is a relational database implemented logically as part of the source system business layer which is using an Oracle database management system as its underlying data store. The transactional data **510** and the master data **515** of the preferred embodiment is stored in a set of relational tables in the source operational database. It is important to note the embodiments of the inventions may also be practiced with a plurality of source systems. With more than one source system workflow steps **S420** and **S425** are redundant since they are no longer required to set up the target system. However, the remaining steps depicted in Fig. 4 would nevertheless be applicable. Hence the data stored in Schema H **591** of the Archive Database **599** may be sourced from a plurality of source systems, typically from different vendors. For example, one source system may be an SAP ECC6.0 system which is migrated to the target system using the workflow depicted in Fig. 4, another source system may be a SalesForce CRM system where transactional data and/or master data is imported into the Archive Database **599** using steps depicted in Fig. 4. and another, third source system is a JD Edwards ERP system. In an embodiment involving a plurality of source systems for every source system a separate Schema H **591** is set up on the archive database. Likewise for the example embodiment with three source systems the JOIN repository **550** is programmed to perform a set theory UNION over three result sets, namely one from each schema H **591**, whereby each result set is the result of a SELECT statement generated by the Archive Select Generator **555.**

The system architecture also comprises an archive system **581**, wherein the archive system comprises one or more archive database management systems (DBMS) **590**, one or more web services **583** and one or more Audit Search and Display User Interfaces **578.** The archive database may be implemented as any relational database. In a preferred embodiment the archive DBMS has been implemented as a Microsoft SQL Sever 2016 Enterprise Edition database. The archive DBMS comprises at least one Archive Database **599.** The archive database may comprise a plurality of schemas. In a preferred embodiment three schemas are created, namely schema A **593** for all data which has been extracted from the source operational database. Schema A is implemented in such a way that it aims to mirror the schema of the source operational database, since the data contained therein is a full extract **597** of the source operational database, which comprises transactional data. Schema O **592** is a schema which is intended to hold operational data which has been identified when the transactional data contained in Schema A has been divided into history data and operational data. Conversely Schema H **591** is set up to hold the history data which has been separated from the transactional data. Only the data comprised in Schema H intended for permanent archive storage. The data in Schema O and in Schema A is staging data which is used for temporary storage between processing steps. Once the migration process is complete all data in Schemas O and A may be deleted since it is no longer needed.

The web service **583** may be implemented as a server running on a computer device, listening for requests at a particular port over a network, serving web documents (such as in XML or JSON format) or a service offered by an electronic device to another electronic device, communicating with each other via the World Wide Web. In an embodiment of the present inventions the web service commonly provides an object-oriented Web-based interface to the Archive Database. In a preferred embodiment the Web Service is implemented on a Tomcat v8.0 server runtime, an Apache Axis webservice runtime and using the SOAP protocol for the interface definition. The History Data Web Service Interface **582** is configured so that it receives a relational database query (usually specified as an SQL statement) and returns a result set with data from the history schema of the archive database, even though the data may also be sourced from any other schema in principle.

The target system **580** is implemented as an SAP S/4 HANA ERP system in a preferred embodiment, even though the same inventive principles can be applied, without limitation, to any other ERP (enterprise resource planning), CRM (customer relationship planning) and BW (business data warehouse) systems. The target system may comprise a Target Operational Database **560**, which may be implemented with any common relational database management system. In a preferred embodiment the Target Operational Database is an SAP HANA in-memory, column-oriented, relational database management system developed and marketed by SAP SE. Its primary function as the software running a database server is to store and retrieve data as requested by the applications which are comprised in the Target System. As part of the said applications of the Target System there are one or more Operational Search and Display User Interfaces **537** which may comprise one or more Search Help Modules **539.** The purpose of such user interfaces is to search for all kinds of transactional data, such as sales orders, purchase orders, finance documents, etc. A user is able to type in search criteria into the search screen, such as a customer number and a date range, if for example the user is seeking all purchase orders for that customer number within that date range. The search sceens typically have search helps which make master data suggestions. A Search Help is a data dictionary object which is used to create a popup window that contains all the data related to a search. It is a fully programmable and modularized form of input help that permits the user to display a list of possible values for a screen field. So, if for example the user wants to search for all purchase orders of customer 'Mill^{∗}', where '^{∗}' represents a wildcard character, then the search help would search through the relevant master data for customer names where the customer name starts with 'Mill', such as 'Miller', 'Millhouse' or 'Millet'. Hence in order to usefully search for transactional data, a user has both access to master data for the search helps and to the transactional data which is the subject of the search itself. A prior art solution for archive searches involves operational master data in combination with a set union of operational transactional data and archived transactional data. This concept has been implemented in SAP ERP ECC6.0 systems with the SAP Archive Link and SAP Archive Information System frameworks. The present inventors have realized that it is desirable to also perform a set union between archived master data (i.e. master date which resides in an archive database) and operational master data (i.e. master data which resides in the operational database) when searching for archived transactional data. This is because the archived transactional data may relate to master data which has also been archived. Hence the prior art solutions whereby the search helps only reference master data from the operational database are cumbersome in terms of usability. In case that the search screen of a Search and Display User Interface is programmed to also conduct validation of input master data, then a search of archived transactional data becomes impossible. This takes place when a valid master data key is entered into a search field when the key belongs to an archived set of master data. Hence the innovative solution by the present inventors, whereby the Search and Display User Interface comprises a combination of master data **526** in the form of transformed history master data **525** and operational master data **520** as well as transactional data **536** in the form of transformed history transactional data **535** and operational transactional data **530** offer an advantage in terms of usability over the prior art. The Search and Display User Interface is linked to an Archive Information System (AIS) **557** whereby the AIS is a module or a component which is programmed to join operational data, in the form of Transformed Transactional Data **565** and Transformed Master Data **570** from the Target Operational Database with archived data, comprising archived master data **594** and transactional history data **595.** The AIS may be vendor-provided, in which case the Archive System Adapter would normally be implemented as an enhancement, which is the case in the preferred embodiment, where the Target System is an SAP S/4 HANA ERP system which comprises a vendor-provided AIS whereby the innovative Archive System Adapter **556** is realized as a third-party plugin written in ABAP and deployed via the Enhancement path. An AIS may alternatively comprise the Archive System Adapter as a module or as a component. The Archive System Adapter may comprise a JOIN repository **550** and an Archive SQL SELECT Generator **555**. A JOIN repository is a repository of computer-executable instructions relating to relaying queries to both the archive database and the operational database in relation to query parameters supplied by a user interface and, once result sets have been returned by the respective databases, to supply the Search and Display User Interface with said result sets. The JOIN repository is also programmed to join result sets together by performing a set theory UNION operation. The JOIN repository is also programmed to perform more complex JOIN operations which cannot be expressed as an SQL statement. This is normally the case when there no one on one table relationship between the transformed data in the operational database and the archived data in the archive database. An example is that in an SAP S/4 HANA migration from an SAP ECC6.0 system the customers are stored in table KNA1 at the migration source and at the migration target no customer table as such exist because at the target only generic business partners exists, which are stored in table BP. A customer in the target hence is an entity of type business partner with role "Customer" whereas it is an entity of type "Customer" with no role at source. Hence whenever joining archive data with operational data involves operations which cannot be easily expressed in SQL-type set theory, then the required logic is coded into modules or enhancements which comprise the JOIN repository. The Archive SQL SELECT Generator **555** is a component or module which is programmed to generate SQL statements compatible with the data and with the SQL language dialect associated with the Archive Database. For example, the JOIN repository in one embodiment sends off SQL statements coded in the SAP propriety OpenSQL SQL dialect against the Target Operational Database, whereas the Archive SELECT generator translates the OpenSQL statement into the dialect which is compatible with the archive database, which is ANSI SQL in a preferred embodiment, or any other SQL dialect such as Microsoft SQL or Oracle SQL. If required the Archive SELECT generator can employ mapping tables or mapping rules in order to translate said OpenSQL query against the operational database into mapped table names and/or mapped field names. This may be necessary because both table names and field names may be different in the archive database and in the operational database, hence a mapping may be required.

Contrary to the JOIN Repository which may have an interface directly to the operational database, the SELECT statements which have been generated by the Archive SQL SELECT generator need to be first passed to the History Data Web Service Interface **582**, a component of the Web Service **583**, which then can use a database driver, such as JDBC or ODBC for example, to execute the said SELECT statements on the archive database and return a result set. The History Data Web Service Interface in a preferred embodiment uses the JDBC driver to query the archive database and it then translates the JDBC result set into an XML format for relaying back to the Archive Information System on the Target System. The AIS then translates said XML to an ABAP internal table compatible in structure with the ABAP internal table used to store the result of the OpenSQL query against the operational database. The JOIN repository then is programmed to merge the two internal tables into a single result table which is in the format required by the Search and Display User Interface.

The present inventors have realized that it is advantageous to provide not just an Operational Search and Display User Interface **537** but also an Audit Search and Display User Interface **578.** This is because for the set-logic UNION between transformed operational data and history data to be possible, the history data has to be also transformed accordingly. However such transformation may oftentimes be incomplete because it is not cost-efficient to expend mapping efforts on large numbers of very rarely used fields which are of no interest to the average business user in the average business use case. However, in audit related use cases it is an indispensable requirement that the user can inspect the unaltered and complete history data. For that reason a second user interface to the history data stored in the archive database is required. Consequently a preferred embodiment also comprises an Audit Search and Display User Interface **578.** Said interface may be able to establish a connection to the history schema **591** of the Archive Database **591** via a suitable driver such as JDBC or ODBC for example. In a preferred embodiment the Audit Search and Display User Interface **578** is hosted within the system boundaries of the Archive System **581** as an HTML5 based web application hosted on a Tomcat 5.0 application server. In an alternative embodiment the Audit Search and Display User Interface **578** is hosted outside the system boundaries of the Archive System **581**, whereby the data is optionally sourced via the History Data Web Service Interface **582**. The Audit Search and Display User Interface **578** provides search and display capabilities to data comprising master data **576**, which comprises Original History Master Data **575** and Transactional Data **577**, which comprises Original History Transactional Data **579.**

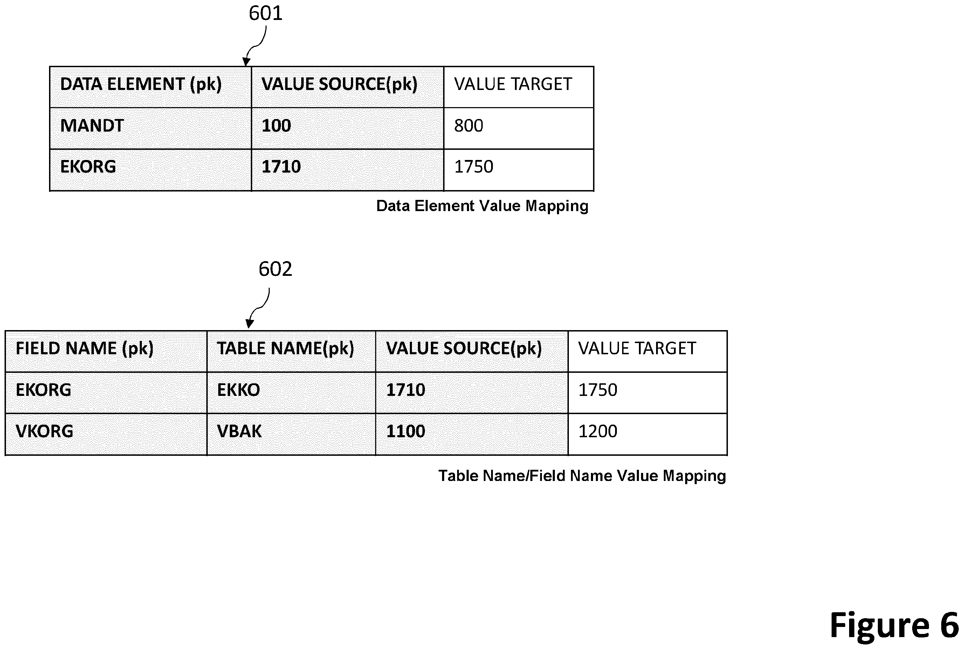

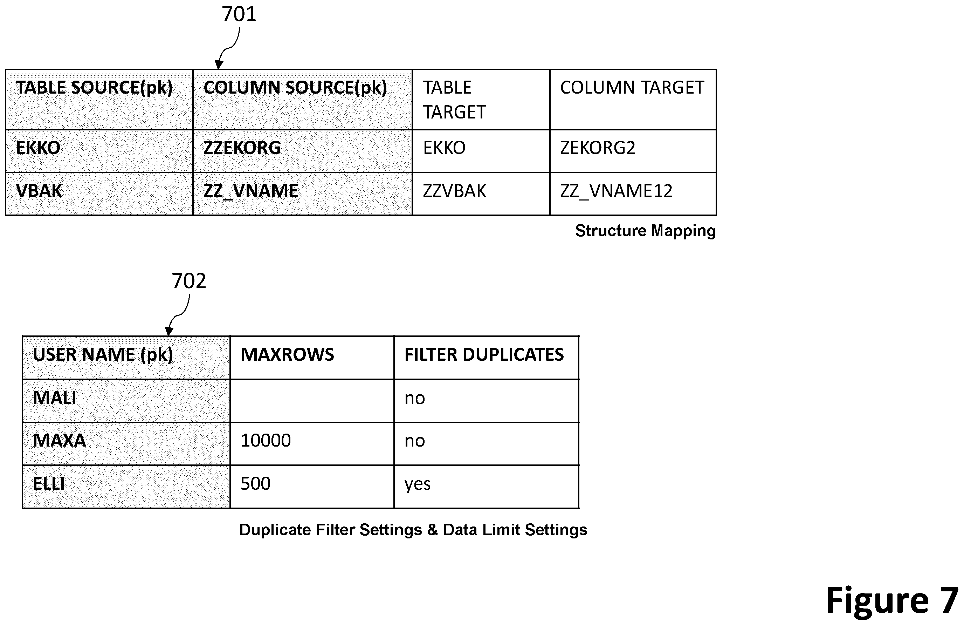

Fig. 6 and 7 depict four customizing tables which may be used in embodiments of the JOIN repository **550.** The said tables are customizing tables in the sense that a user or an administrator may populate the tables with custom data, or alternatively alter pre-set data contained therein. Table **601** depicts a customizing table for mapping values of data elements in order to accomplish Data Element Value Mapping. A data element defines an elementary data type or a reference type and describes, alongside the technical type attributes, the semantic meaning of an object defined with reference to the data element. Tables comprised in the Source Operational Database **505** and in the Archive Database **599** are relational tables which comprise table fields which are associated, usually via data dictionary, with a data element. Each table field hence may be associated with a field name and a data element. Table **601** has a column for storing a reference to a data element (depicted as field DATA ELEMENT in the table), a column for storing a source value (depicted as field SOURCE VALUE in the table) and a column for storing a target value (depicted as field TARGET VALUE in the table). Optionally the tables depicted in Figs. 6 and 7 may comprise other columns, such a column for client for example. In a preferred embodiment the fields data element reference and source value are primary keys. Primary key fields are marked as "(pk)" in the tables depicted in Figs. 6 and 7. Table **601** is populated with example data. The first line of the depicted example data is interpreted as follows by the algorithm implemented in an embodiment of the JOIN repository: *IF there is a column in a result set sourced from the archive database 599 which is associated with data element 'MANDT', then check for each row of that column if the value is '700 ', if yes then replace the value with '800 if no then do nothing.*

This type of rule is particularly useful in a use case where there is more than one source system **500** and where a source system is not on an upgrade path to the target system **580.** This would be the case if a new business unit has been bought and it is considered desirable that the history transactional data of this business unit is visible through the Operational Search and Display User Interface **537.** Since the bought business unit may have had different key for fields such as vendor organization, client or purchase organizational as mapping may be useful, since it enables to map equivalents. The second line of example data in table **601** illustrates such an equivalent. In the example purchase organization '1710' in the source system is the same as purchase organization `1750' in the target system. Hence the JOIN repository **550** interprets the second line of the example table **601** as: *IF there is a column in a result set sourced from the archive database **599** which is associated with data element EKORG', then check for each row of that column if the value is '1710', if yes then replace the value with '1750', if no then do nothing.*

It is important to note that the depicted tables **601**, **602**, **701** and **702** are for embodiments where there is only one source system **500.** In other embodiments where there is a plurality of source system, then tables **601**, **602**, **701** and **702** may have an extra primary key field designating a source system, in such a way that each table line is also associated with a specific source system. However, even in the case with multiple source systems, it is possible to work without a source system primary key, in case the source systems are similar enough to warrant a generic mapping rule set which is applicable to any source system.

For cases where the reference to a data element may be too generic, an embodiment of the JOIN repository **550** uses a customizing table **602** wherein instead of a data element, reference is made to a specific table in a source system (depicted as field TABLE NAME in the table) and a specific field name (depicted as field FIELD NAME in the table) within that table. This is what constitutes Table Name/Field Name Value Mapping.

Table **602** is populated with example data. The first line of the depicted example data is interpreted as follows by the algorithm implemented in an embodiment of the JOIN repository: *IF there is a column in a result set sourced from the archive database **599** which is associated with field name 'EKORG' and with table name EKKO', then check for each row of that column if the value is '1710*', *if yes then replace the value with '1750', if no then do nothing.*

The JOIN repository **550** also, in some embodiments, makes use of a mapping in the form indicated by table **701.** This is what constitutes Structure Mapping in this context. Here a column of a of a source table (depicted as field COLUMN SOURCE in the table) and the table name of a source table (depicted as field TABLE SOURCE in the table) are used as primary keys when looking up a name of a target table (depicted as field TARGET TABLE in the table) and a column name (depicted as field COLUMN TARGET in the table) within that target table.

The first line of the depicted example data is interpreted as follows by the algorithm implemented in an embodiment of the JOIN repository: *IF there is a column in a result setsourced from the archive database **599** which is named 'ZZEKORG' and which originates from a source table named 'EKKO', then copy the field value for the said column of each row to field 'ZEKORG2' in target table 'EKKO'. In order to find the corresponding target lines in the target table for the copy operation assume that the target table has the same keys as a primary key of the source table and use said keys as a lookup in order to look up the target line for the copy operation.*

Some embodiments of the inventions may also have customizing tables similar to the table depicted as **702.** The customizing table accomplishes setting Duplicate Filter Settings & Data Limit Settings. Here for a user (depicted as field USER NAME in the table) of the target system **580,** a maximum number of rows (depicted as field MAXROWS in the table) returned from the History Data Web Service Interface **582** can optionally be set. This is to ensure that the Operational Search and Display User Interface **537** remains responsive even if there is an unintentional request for an extremely large data set.

For a user a Boolean setting whether duplicates are to be filtered (depicted as field FILTER DUPLICATES in the table) can optionally be set. Duplicates in this context occur when the History Data Web Service Interface **582** is configured, in an alternative embodiment, to query SchemaA **593** as opposed to Schema H **591.** Querying Schema A makes sense where no separation of history data and operational data has been performed, or when there are overlaps for any reason between history data in the Archive Database **599** and operational data in the target database **560.** When the duplicate filter is switched on, the JOIN repository **550** may be configured to check for every row of a result set sourced from the Target Operational Database **560** if a duplicate exists in a result set sourced from the Archive Database **599**. For such a duplicate check the respective result sets need to originate from a table-based query, wherein the name of the respective table needs to be the same. In an embodiment the data structure of the table on which the result set from the operational database is based is analyzed by making a query on a data dictionary on the target system. In an embodiment on a SAP S/4 System the data structure of the result set may be queried by using SAP standard methods cl_abap_elemdescr=>describe_by_name ( "tablename" ) and cl_abap_elemdescr ->get_ddic_field_list( ) which return a list of fields which exhibitan attribute KEYFLAG which indicates a primary key if it is set to 'X'. With the primary key field of the result set from the operational database it then becomes possible to look up the same primary key on the result set from the archive database. If in the result set from the archive database such primary key is successful, then the respective rows may be hidden from being displayed on Operational Search and Display User Interface **537.**

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims.

The above detailed description describes various features and functions of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the spirit or scope of the subject matter presented herein. Itwill be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the diagrams, scenarios, and flow charts in the figures and as discussed herein, each block and/or communication can represent a processing of information and/or a transmission of information in accordance with example embodiments. Alternative embodiments are included within the scope of these example embodiments. In these alternative embodiments, for example, functions described as blocks, transmissions, communications, requests, responses, and/or messages can be executed out of order from that shown or discussed, including substantially concurrent or in reverse order, depending on the functionality involved. Further, more or fewer blocks and/or functions can be used with any of the diagrams, scenarios, and flow charts discussed herein, and these diagrams, scenarios, and flow charts can be combined with one another, in part or in whole.

A block that represents a processing of information can correspond to circuitry that can be configured to perform the specific logical functions of a herein-described method or technique. Alternatively or additionally, a block that represents a processing of information can correspond to a module, a segment, or a portion of program code (including related data). The program code can include one or more instructions executable by a processor for implementing specific logical functions or actions in the method or technique. The program code and/or related data can be stored on any type of computer readable medium such as a storage device including a disk or hard drive or other storage medium.

The computer readable medium can also include non-transitory computer readable media such as computer-readable media that stores data for short periods of time like register memory, processor cache, and random access memory (RAM). The computer readable media can also include non-transitory computer readable media that stores program code and/or data for longer periods of time, such as secondary or persistent long term storage, like read only memory (ROM), optical or magnetic disks, compact-disc read only memory (CD-ROM), for example. The computer readable media can also be any other volatile or non-volatile storage systems. A computer readable medium can be considered a computer readable storage medium, for example, or a tangible storage device.

Moreover, a block that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

### Definitions and Clarifications

Herein below are a few definitions and clarifications. As used herein:

The terms "a" and "an", when modifying a noun, do not imply that only one of the nouns exists.

The term "comprise" (and grammatical variations thereof) shall be construed broadly, as if followed by "Without limitation". If A comprises B, then A includes B and may include other things.

The term "e. g." means including without limitation. The fact that an "example" or multiple examples of something are given does not imply that they are the only instances of that thing. An example (or a group of examples) is merely a non-exhaustive and non-limiting illustration.

The term "include" (and grammatical variations thereof) shall be construed broadly, as if followed by "Without limitation".

The term "or" is an inclusive disjunctive. For example "A or B" is true if A is true, or B is true, or both A or B are true.

A parenthesis is simply to make text easier to read, by indicating a grouping of words. A parenthesis does not mean that the parenthetical material is optional or can be ignored.

It is to be understood that the inventions disclosed herein are not limited to the exact details of construction, operation, exact materials or embodiments shown and described. Although specific embodiments of the inventions have been described, various modifications, alterations, alternative constructions, and equivalents are also encompassed within the scope of the inventions. Although the present inventions may have been described using a particular series of steps, it should be apparent to those skilled in the art that the scope of the present inventions is not limited to the described series of steps. The specification and drawings are, accordingly, to be regarded in an illustrative rather than a restrictive sense. It will be evident that additions, subtractions, deletions, and other modifications and changes may be made thereunto without departing from the broader spirit and scope of the inventions as set forth in the claims set forth below. Accordingly, the inventions are therefore to be limited only by the scope of the appended claims. None of the claim language should be interpreted pursuant to 35 U.S.C. 112(f) unless the word "means" is recited in any of the claim language, and then only with respect to any recited "means" limitation.

## Claims

1. A computer implemented method for processing information related to an extract-transform-load (ETL) data migration, the method comprising:
extracting a full set of transactional data, master data and customizing data from a source system,
separating said transactional data into history data and operational data,
creating a copy of said source system without said transactional data,
creating an instance of a target system by performing a combined system conversion and database migration on said copy of said source system,
transforming said operational data in such a way that it becomes compatible with a data schema of a database for operational data on said target system,
loading said transformed operational data into said database for operational data,
loading said history data into a database for history data on an archive system,
loading a search help module in relation to a user query for transactional data on said target system, wherein said search help is configured to query master data from said database for operational data and from said database for history data, and
in response to said user query:
obtaining a first result set sourced from said database for history data and transforming said first result set in such a way that field names are mapped from a schema of said database for history data to a schema of said operational database, and
performing a set theory UNION operation between said first result set and a second result set sourced from said database for operational data.

2. The method of claim 1, further comprising the step of
loading history data sourced from a second source system into a schema of said database for history data, and
wherein said set theory UNION operation is between said first result set, said second result set and a third result set sourced from said database for history data, wherein said third result set relates to a query in said schema.

3. The method of claim 1, further comprising the step of
separating said master data into history data and operational data.

4. The method of claim 1, further comprising the step of:
in response to said user query:
performing data element value mapping.

5. The method of claim 1, further comprising the step of:
in response to said user query:
performing table name/field name value mapping.

6. The method of claim 1, further comprising the step of:
in response to said user query:
performing structure mapping.
